# EUROPEAN PATENT APPLICATION

(11) **EP 3 376 474 A1**
(43) Date of publication of application: **19.09.2018**
(21) Application number: 18155302.5
(22) Date of filing: 06.02.2018
(51) Int. Cl.: G07B 15/02, G07B 15/04, G07F 17/24, G06Q 20/12

(54) **FACILITY GATE CONTROL SYSTEM AND METHOD**

(30) Priority: 17.03.2017 JP 2017053247
(71) Applicant: Toshiba TEC Kabushiki Kaisha, Tokyo 141-8562 (JP)
(72) Inventor: TSUNODA, Youji, Shinagawa-ku,, Tokyo 141-8562 (JP)
(74) Representative: Takeuchi, Maya

(57) **Abstract**

A gate control system that controls access to a facility is disclosed. A processor receives an identification code when a user begins use of the facility, and controls the storage device to store the identification code in association with a time that the user begins use of the facility. The processor receives an identification code when the user ends use of the facility and a time that the user ends use of the facility. The processor acquires, from an external server transaction data associated with the identification code. The processor calculates a use fee for the facility based on calculated use time of the facility and the received transaction data. The processor performs a payment processing for the calculated use fee, and opens the gate when the payment processing is complete.

## Description

### FIELD

Embodiments described herein relate generally to a technology for controlling a gate to a facility, and more particularly to a gate control system, method and computer program which can perform paperless fee collection utilizing an electronic receipt system.

### BACKGROUND

In the retail industry, an electronic receipt system provides for paperless receipts. However, in a parking lot in a retail store such as a supermarket or a shopping center, paper is still used for issuing and collecting parking tickets. The parking fee in this type of parking lot is determined based on a parking time and a purchase record in the retail store. Therefore, it is necessary that an issued parking ticket can be used in the retail store to verify use of the parking lot and to record a transaction in the retail store.

### SUMMARY OF INVENTION

To solve the above-cited problems, there is provided a gate control system that controls access to a facility, the gate control system comprising:
a communication interface configured to communicate with an external server;
at least one input device configured to read an identification code corresponding to a user;
a storage device; and
a processor configured to:
   receive an identification code read by the input device when a user begins use of the facility,
   control the storage device to store the identification code read by the input device when the user begins use of the facility in association with a time that the user begins use of the facility,
   receive an identification code read by the input device when the user ends use of the facility and a time that the user ends use of the facility,
   transmit, to the external server via the communication interface, a request for transaction data associated with the identification code read by the input device when the identification code read by the input device when the user ends use of the facility is received,
   receive, from the external server via the communication interface, transaction data associated with the identification code read by the input device,
   calculate a use time based on the time stored in the storage device compared to the received time that the user ends use of the facility,
   calculate a use fee for the facility based on the calculated use time and the received transaction data,
   perform a payment processing for the calculated use fee, and
   open the gate when the payment processing is complete.

In an exemplary embodiment, the at least one input device preferably may include a first input device positioned at an entrance to the facility, and a second input device positioned at an exit to the facility proximate to the gate.

Preferably in the embodiments the gate proximate to the exit may be a first gate, and the processor may further be configured to open a second gate proximate to the entrance when the identification code read by the first input device when the user begins use of the facility is received.

Preferably in the embodiments the first input device may be a first scanner, and the second input device may be a second scanner.

Preferably in the embodiments the transaction data received from the external server may include an electronic receipt generated during the use time.

In the embodiments the processor preferably may further be configured to:
when processing of the payment for the calculated use fee is complete, transmit, to the external server via the communication interface, an electric receipt corresponding to the use of the facility and the processed payment.

Preferably in the embodiments the identification code may be an electronic receipt ID displayed on a user device so as to be read by the input device.

In another exemplary embodiment there is also provided a system comprising:
the gate control system according to the embodiments; and
an electronic receipt system including the server configured to communicate with the gate control system.

In yet another exemplary embodiment there is also provided a method for controlling a gate to a facility, the method comprising:
receiving an identification code read by an input device when a user begins use of the facility;
controlling a storage device to store the identification code read by the input device when the user begins use of the facility in association with a time that the user begins use of the facility;
receiving an identification code read by the input device when the user ends use of the facility and a time that the user ends use of the facility;
transmitting, to an external server, a request for transaction data associated with the identification code read by the input device when the identification code read by the input device when the user ends use of the facility is received;
receiving, from the external server, transaction data associated with the identification code read by the input device;
calculating a use time based on the time stored in the storage device compared to the received time that the user ends use of the facility;
calculating a use fee for the facility based on the calculated use time and the received transaction data;
performing a payment processing for the calculated use fee; and
opening the gate when the payment processing is complete.

In the embodiment the input device preferably may include:
a first input device that receives the identification code when the user begins use of the facility and is positioned at an entrance to the facility, and
a second input device that receives the identification code read when the user ends use of the facility and is positioned at an exit to the facility proximate to the gate.

Preferably in the embodiments the gate proximate to the exit may be a first gate, and the method may further comprise:
opening a second gate proximate to the entrance when the identification code read by the first input device when the user begins use of the facility is received.

Preferably in the embodiments the first input device may be a first scanner, and the second input device may be a second scanner.

Preferably in the embodiments the transaction data received from the external server may include an electronic receipt generated during the use time.

The method according to the embodiments preferably may further comprise:
when processing of the payment for the calculated use fee is complete, transmitting, to the external server via the communication interface, an electric receipt corresponding to the use of the facility and the processed payment.

In yet another exemplary embodiment there is also provided a computer readable medium carrying a program for causing a computer for controlling a gate to a facility to perform the method according to the embodiments.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram illustrating an overall configuration of an electronic receipt system and fee collection system according to an embodiment.
FIG. 2 is a block diagram illustrating a configuration of a fee handling server.
FIG. 3 is a schematic diagram illustrating an example of a data structure of an affiliated store database.
FIG. 4 is a schematic diagram illustrating an example of a data structure of a fee table.
FIG. 5 is a schematic diagram illustrating an example of a data structure of a discount table.
FIG. 6 is a schematic diagram illustrating a data structure of a user record stored in a user profile.
FIG. 7 is a flowchart illustrating processing according to an embodiment.

### DETAILED DESCRIPTION

An object of an embodiment is to provide a gate control system which can perform paperless fee collection when using facilities such as a parking lot, by utilizing an electronic receipt system.

According to an embodiment, a gate control system that controls access to a facility includes a communication interface that communicates with an external server. At least one input device reads an identification code corresponding to a user. A processor receives an identification code read by the input device when a user begins use of the facility, and controls the storage device to store the identification code read by the input device when the user begins use of the facility in association with a time that the user begins use of the facility. The processor receives an identification code read by the input device when the user ends use of the facility and a time that the user ends use of the facility. The processor transmits, to the external server via the communication interface, a request for transaction data associated with the identification code read by the input device when the identification code read by the input device when the user ends use of the facility is received. The processor receives, from the external server via the communication interface, transaction data associated with the identification code read by the input device. The processor calculates a use time based on the time stored in the storage device compared to the received time that the user ends use of the facility, and calculates a use fee for the facility based on the calculated use time and the received transaction data. The processor performs a payment processing for the calculated use fee, and opens the gate when the payment processing is complete.

Hereinafter, an embodiment of a system for controlling a gate which can perform paperless fee collection when a facility such as a parking lot is used, by utilizing an electronic receipt system will be described with reference to the drawings.

In the embodiment, as an example, a fee handling device that processes parking lot fee collection in a fee system will be described.

Example parameters of the Fee System are as follows:
- Use time is 12 hours maximum
- Basic fee when a use time is shorter than one hour: 100 yen
- 100 yen is added for each hour that elapses from a use start, until the use time reaches 8 hours
- If the use time exceeds 8 hours, flat 1,000 yen until the use time is 12 hours maximum
- If the purchase amount in an affiliated store is 0 yen, no discount
- If the purchase amount in an affiliated store is smaller than 2,000 yen, 100 yen discount
- If the purchase amount in an affiliated store is 2,000 yen or greater and smaller than 3,000 yen, 200 yen discount
- If the purchase amount in an affiliated store is equal to or greater than 3,000 yen, 300 yen discount

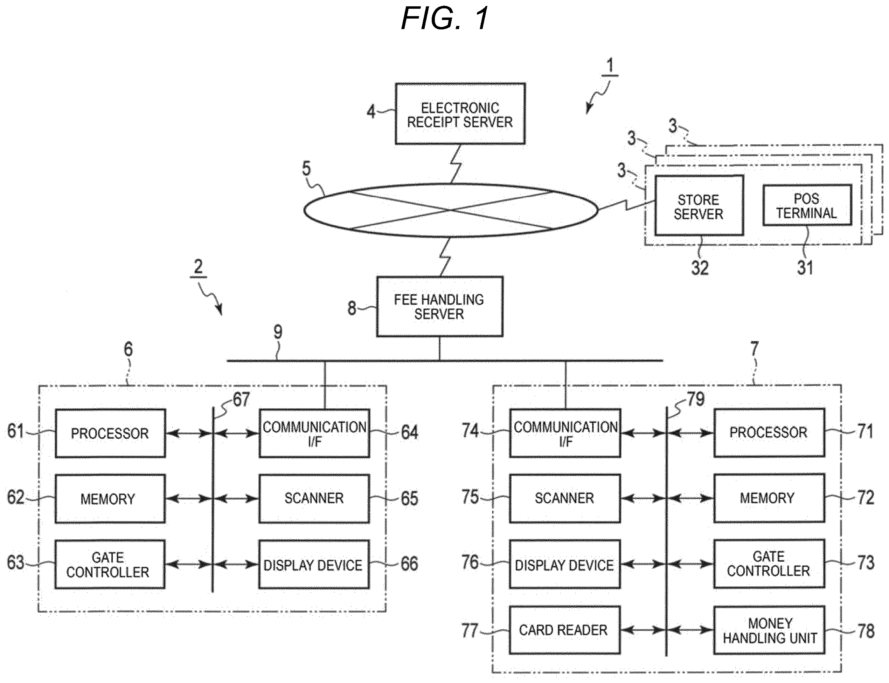

FIG. 1 is a block diagram illustrating an overall configuration of an electronic receipt system and fee collection system according to an embodiment. The embodiment includes electronic receipt system 1 and fee collection system 2 that manages the fees for a parking lot. The electronic receipt system 1 includes a point-of-sales (POS) system 3 and an electronic receipt server 4. The POS system 3 is provided in each participating store which participates in an electronic receipt service. The electronic receipt server 4 is provided in an electronic receipt center. The POS system 3 includes a POS terminal 31 and a store server 32. The POS terminal 31 and the store server 32 are connected to each other via a wired or wireless local area network (LAN). The store server 32 in each POS system 3 is connected to the electronic receipt server 4 via a wide area network 5 such as the Internet.

The electronic receipt system 1 generates an electronic receipt based on transaction data from a POS terminal 31 when a user who uses an electronic receipt service purchases a commodity or receives provision of a service in a participating store. The electronic receipt is stored in the electronic receipt server 4. When a user is registered for an electronic receipt service, an ID is used for identifying the user, that is, a so-called electronic receipt ID. For example, the electronic receipt ID is used in an electronic receipt application program installed on a smart phone, and thus the electronic receipt ID is displayed in a display device of the smart phone. The electronic receipt ID is displayed in a form of a code, so as to be allowed to be read by a scanner.

When paying in a participating store, a user presents an electronic receipt ID to a sales clerk. The sales clerk registers transaction information for the user in the POS terminal 31 and reads the electronic receipt ID by using a scanner connected to the POS terminal 31. With this process, an electronic receipt is generated based on the transaction information in the POS terminal 31. This electronic receipt is sent to the electronic receipt server 4 along with the electronic receipt ID, via the store server 32.

The electronic receipt server 4 stores an electronic receipt sent from each participating store in association with the corresponding electronic receipt ID. A user accesses the electronic receipt server 4 via a web-browser from a personal computer, a smart phone, or the like, and thus can view electronic receipts of the user himself/herself.

The fee collection system 2 includes a first terminal 6 installed at an entrance of a parking lot, a second terminal 7 installed at an exit of the parking lot, and a fee handling server 8. The first terminal 6 and the second terminal 7 are connected to the fee handling server 8 via a network 9 such as a LAN.

The first terminal 6 includes a processor 61, a memory 62, a gate controller 63, a communication interface 64, a scanner 65, a display device 66, and the like. The first terminal 6 further includes a system transmission line 67 such as an address bus, a data bus, and the like. The constituent components are connected to each other with the processor 61 as the center, via the system transmission line 67. The first terminal 6 may include a computer with the memory 62 connected to the processor 61 via the system transmission line 67.

The processor 61 corresponds to the central portion of the computer. The processor 61 controls the components to realize various functions as the first terminal 6, in accordance with an operating system or an application program.

The memory 62 corresponds to the storage device of the computer. The memory 62 includes a nonvolatile memory area and a volatile memory area. The memory 62 stores the operating system or the application program in the nonvolatile memory area. In the memory 62, data required when the processor 61 performs processing for controlling the units may be stored in the nonvolatile or volatile memory area. In the memory 62, the volatile memory area is used as a work area, a display buffer, or the like in which data is appropriately rewritten by the processor 61.

The gate controller 63 controls opening and closing of a gate provided at the entrance in the parking lot. The communication interface 64 is an interface for communicating with the fee handling server 8 via the network 9. The scanner 65 is a device used, for example, for reading an electronic receipt ID displayed on a smart phone of a user of the electronic receipt service. The display device 66 is a device used for displaying instructions and the like for a user who enters into the parking lot.

Here, the scanner 65 in the first terminal 6 functions as a first reading unit configured to read an identification code for identifying a user who uses the electronic receipt system.

The first terminal 6 may have a function as a parking ticket issuing machine which is conventionally installed at the entrance of the parking lot.

The second terminal 7 includes a processor 71, a memory 72, a gate controller 73, a communication interface 74, a scanner 75, a display device 76, a card reader 77, a money handling unit 78, and the like. The second terminal 7 further includes a system transmission line 79 such as an address bus, a data bus, and the like. The constituent components are connected to each other with the processor 71 as the center via the system transmission line 79. The second terminal 7 may include a computer with the memory 72 connected to the processor 71 via the system transmission line 79.

The processor 71 corresponds to the central portion of the computer. The processor 71 controls the components to realize various functions as the second terminal 7, in accordance with an operating system or an application program.

The memory 72 corresponds to the storage device of the computer. The memory 72 includes a nonvolatile memory area and a volatile memory area. The memory 72 stores the operating system or the application program in the nonvolatile memory area. In the memory 72, data required when the processor 71 performs processing for controlling the units may be stored in the nonvolatile or volatile memory area. In the memory 72, the volatile memory area is used as a work area, a display buffer, or the like in which data is appropriately rewritten by the processor 71.

The gate controller 73 controls opening and closing of a gate provided at the entrance in the parking lot. The communication interface 74 is an interface for communicating with the fee handling server 8 via the network 9. The scanner 75 is a device used, for example, for reading an electronic receipt ID displayed on a smart phone of a user of the electronic receipt service. The display device 76 is a device used for displaying a parking fee (amount of money to be paid) and the like. The card reader 77 is a device used for reading data on a card medium such as an electronic money card or a prepaid card, which allows a parking fee to be paid. The money handling unit 78 is a machine used to count cash fed from a cash feeding port, to calculate a change amount from the total amount of the counted cash and the parking fee, and to dispense cash corresponding to the change when the change is present, to a cash withdrawal port.

Here, the scanner 75 in the second terminal 7 functions as a second reading unit configured to read an identification code for identifying a user who uses an electronic receipt.

The second terminal 7 may have a function as a fee payment machine which is conventionally installed at the entrance of the parking lot.

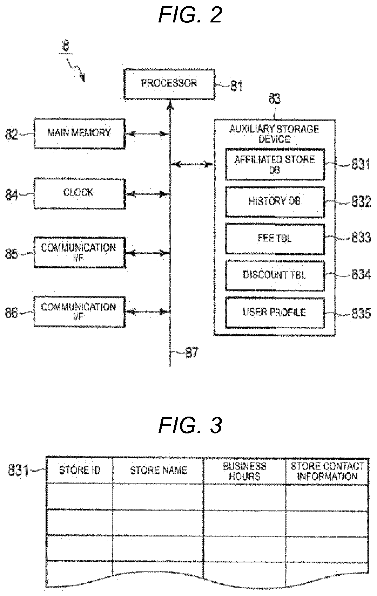

The fee handling server 8 is one form of the fee handling device. The fee handling server 8 will be described below in detail with reference to FIGS. 2 to 7.

FIG. 2 is a block diagram illustrating the configuration of the fee handling server 8. As illustrated in FIG. 2, the fee handling server 8 includes a processor 81, a main memory 82, an auxiliary storage device 83, a clock 84, a first communication interface 85, a second communication interface 86, and the like. The fee handling server 8 further includes a system transmission line 87 such as an address bus, a data bus, and the like. The constituent components are connected to each other with the processor 81 as the center via the system transmission line 87. The fee handling server 8 may include a computer with the main memory 82 and the auxiliary storage device 83 connected to the processor 81 via the system transmission line 87.

The processor 81 corresponds to the central portion of the computer. The processor 81 controls the components to realize various functions as the fee handling server 8, in accordance with an operating system or an application program.

The main memory 82 corresponds to the main storage device of the computer. The main memory 82 includes a nonvolatile memory area and a volatile memory area. The main memory 82 stores the operating system or the application program in the nonvolatile memory area. In the main memory 82, data required when the processor 81 performs processing for controlling the units may be stored in the nonvolatile or volatile memory area. In the main memory 82, the volatile memory area is used as a work area in which data is appropriately rewritten by the processor 81.

The auxiliary storage device 83 corresponds to the auxiliary storage device of the computer. For example, a hard disk drive (HDD), a solid state drive (SSD), and an electric erasable programmable read-only memory (EEPROM) are used as the auxiliary storage device 83. The auxiliary storage device 83 stores data to be used when the processor 81 performs various types of processing, or data generated by processing in the processor 81. The auxiliary storage device 83 may store the application program.

The clock 84 clocks the current date and time point. The first communication interface 85 is an interface configured to communicate with the electronic receipt server 4 via the network 5. The second communication interface 86 is an interface configured to communicate with the first terminal 6 or the second terminal 7 via the network 9.

Here, the first communication interface 85 functions as a communication unit configured to communicate with the electronic receipt server 4. The second communication interface 86 functions as a second communication unit configured to communicate with the first terminal 6 including the first reading unit (scanner 65) and with the second terminal 7 including the second reading unit (scanner 75).

In the fee handling server 8 having the above-described configuration, an affiliated store database 831, a history database 832, a fee table 833, a discount table 834, and a user profile 835 are provided in the auxiliary storage device 83 in order to collect a parking fee without using paper, by utilizing the electronic receipt system 1. The fee handling server 8 stores a dedicated application program, that is, a so-called fee handling program, in the main memory 12 or the auxiliary storage device 13.

The affiliated store database 831 stores information regarding stores which are affiliated with a parking lot managed by the fee collection system 2. That is, the affiliated store database 831 stores information regarding the stores that participate in the electronic receipt service.

FIG. 3 is a schematic diagram illustrating an example of a data structure of the affiliated store database 831. As illustrated in FIG. 3, the affiliated store database 831 stores a store ID, a store name, business hours, store contact information, and the like for each affiliated store. The store ID is a specific code which is assigned to each participating store in order to identify each participating store which participates in the electronic receipt service. In addition, a store ID is included along with transaction information such as transaction date and time and the transaction amount of money, in an electronic receipt generated by a POS terminal 31 or a store server 32 in the participating store.

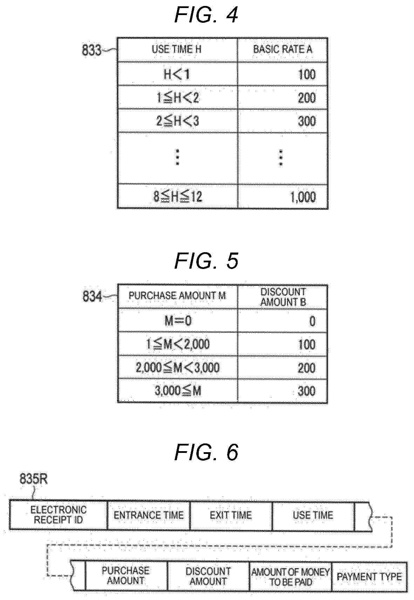

The history database 832 stores information regarding use history of a parking lot. Specifically, the history database 832 time-sequentially stores user records 835R (see FIG. 6) stored in the user profile 835 which will be described later.

The fee table 833 stores setting information regarding a parking fee.

FIG. 4 is a schematic diagram illustrating an example of a data structure of the fee table 833. As illustrated in FIG. 4, the fee table 833 stores a basic rate A in association with a use time H of the parking lot. In addition, the relationship between the use time H and the basic rate A, which is illustrated in FIG. 4 is based on the above-described fee system.

The discount table 834 stores information regarding discount of the parking fee.

FIG. 5 is a schematic diagram illustrating an example of a data structure of the discount table 834. As illustrated in FIG. 5, the discount table 834 stores a discount amount B in association with a purchase amount M of a user of the parking lot in an affiliated store. In addition, the relationship between the purchase amount M and the discount amount B, which is illustrated in FIG. 5 is based on the above-described fee system.

The user profile 835 stores information regarding a user who uses the parking lot.

FIG. 6 is a schematic diagram illustrating a data structure of the user record 835R stored in the user profile 835. The user record 835R includes items of an electronic receipt ID, an entrance time point, an exit time point, a use time, a purchase amount, a discount amount, an amount of money to be paid, a payment type, and the like. Details of the items will be described in information processing in accordance with the fee handling program of the processor 81, which will be described next.

In addition, if a user identified by the electronic receipt ID ends use of the parking lot, the user record 835R is preserved in the history database 832 and is deleted from the user profile 835.

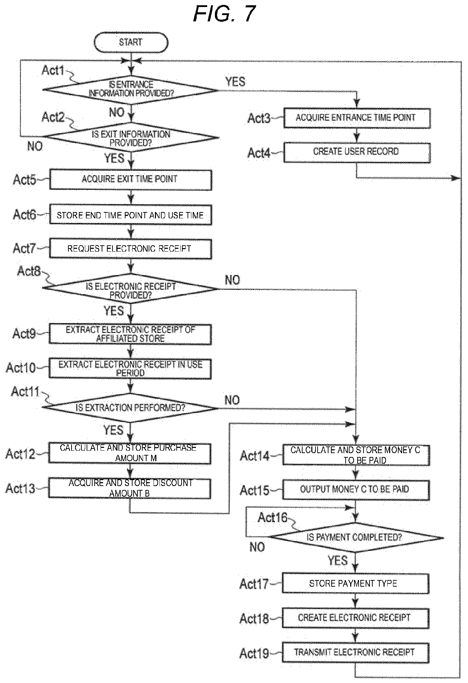

FIG. 7 is a flowchart illustrating processing performed by the processor 81 in accordance with the fee handling program. The illustrations in FIG. 7 and details of processing which will be described below are just an example. The processing procedures and processing details are not particularly limited so long as a similar result can be obtained.

Firstly, a user who starts to use a parking lot starts, for example, an electronic receipt application program installed on a smart phone, and thus an electronic receipt ID is displayed in the display device of the smart phone. The user inputs an electronic receipt ID via the scanner 65 of the first terminal 6 installed at the entrance of the parking lot. If the electronic receipt ID is input via the scanner 65, the processor 61 of the first terminal 6 controls the gate controller 63 to open the gate, and controls the communication interface 64 to transmit entrance information, including the electronic receipt ID read by the scanner 65, to the fee handling server 8. Based on the control, the communication interface 64 transmits the entrance information including the electronic receipt ID to the fee handling server 8 via the network 9. If a sensor (not illustrated) detects that a vehicle passes through the gate, the gate controller 63 closes the gate.

The processor 81 of the fee handling server 8 confirms whether or not entrance information is received (Act 1). When the entrance information is not received (NO in Act 1), the processor 81 confirms whether or not exit information is received (Act 2). The exit information will be described later. When the exit information is not received (NO in Act 2), the processor 81 returns to Act 1. Here, the processor 81 waits for receiving the entrance information or the exit information in Act 1 and Act 2.

If the entrance information is received from the first terminal 6 (YES in Act 1), the processor 81 acquires date and time clocked by the clock 84, as an entrance time point (Act 3). The processor 81 adds a new user record 835R to the user profile 835 (Act 4), and stores the electronic receipt ID included in the entrance information and the entrance time point acquired in Act 3, in the user record 835R. Then, the processor 81 causes the process to return to the waiting state in Act 1 and Act 2.

Here, the user profile 835 functions as the storage unit.

The user who parks the vehicle in the parking lot generally purchases a commodity or receives provision of a service in the affiliated store. Thus, when paying, if this retail store is a participating store for the electronic receipt, the user presents the electronic receipt ID to the store when completing the transaction. If the electronic receipt ID is presented, an electronic receipt is generated based on transaction information with the user amd is sent along with the electronic receipt ID to the electronic receipt server 4 by operation of the above-described electronic receipt system 1.

A user who ends use of the parking lot causes an electronic receipt ID to be displayed in the display device of the smart phone and the like, similar to the time when the user starts the use of the parking lot. The user inputs the electronic receipt ID via the scanner 75 of the second terminal 7 installed at the exit of the parking lot. If the electronic receipt ID is input via the scanner 75, the processor 71 of the second terminal 7 controls the communication interface 74 to transmit exit information including the electronic receipt ID which is read by the scanner 75, to the fee handling server 8. Based on the control, the communication interface 74 transmits the exit information including the electronic receipt ID to the fee handling server 8 via the network 9.

In the waiting state in Act 1 and Act 2, if the exit information is received from the second terminal 7 (YES in Act 2), the processor 81 acquires date and time clocked by the clock 84, as an exit time point (Act 5). The processor 81 searches for the user profile 835 (Act 6), and detects a user record 835R including the electronic receipt ID which is included in the exit information. The processor 81 records the exit time point acquired in Act 5, in this user record, that is, the user record (hereinafter referred to as a target user record 835R) created when the user started using the parking lot. The processor 81 calculates an elapsed time from the entrance time point of the target user record 835R to the exit time point (Act 6) and stores the calculated elapsed time in the target user record 835R as a use time H.

The processor 81 controls the first communication interface 85 to transmit an inquiry command for an electronic receipt to the electronic receipt server 4 (Act 7). Based on the control, the first communication interface 85 generates request command and transmits the request command to the electronic receipt server 4 via the network 5. The request command includes the electronic receipt ID included in the exit information and the current date clocked by the clock 84.

The parking lot may be used over two days. In such a case, the first communication interface 85 may generate an request command including today's date and the day before, and may transmit the inquiry command to the electronic receipt server 4 via the network 5.

The electronic receipt server 4 which receives the request command detects an electronic receipt which is stored in association with the electronic receipt ID included in the inquiry command. The electronic receipt server 4 extracts an electronic receipt having a transaction date that coincides with the date included in the request command, out of detected electronic receipts. The electronic receipt server 4 transmits a response command which includes all extracted electronic receipts, to the fee handling server 8 via the network 5. When it is not possible to extract an electronic receipt in which the transaction date coincides with the date included in the request command, the electronic receipt server 4 transmits a response command indicating no electronic receipt, to the fee handling server 8.

Thus, when the user causes an electronic receipt to be issued when paying in the participating store, a response command including the electronic receipt is transmitted from the electronic receipt server 4 to the fee handling server 8. However, when there is no electronic receipt for today because the user does not purchase a commodity, a response command indicating no electronic receipt is transmitted from the electronic receipt server 4 to the fee handling server 8.

The processor 81 which requests an electronic receipt waits for a response command (Act 8). When a response command including an electronic receipt is received (YES in Act 8), the processor 81 searches for a store ID of the electronic receipt included in the response command (Act 9). The processor 81 extracts an electronic receipt including a store ID which coincides with an affiliated store ID stored in the affiliated store database 831.

If extraction of an electronic receipt including a store ID which coincides with the affiliated store ID is ended, the processor 81 searches a transaction time point of the extracted electronic receipt (Act 10). The processor 81 extracts an electronic receipt having a transaction time point which is included in a use period between the entrance time point and the exit time point of the user record 835R which is detected from the user profile 835 in the process of Act 6.

An electronic receipt having a transaction time point which is included in the use period may be extracted from electronic receipts included in the inquiry command, and then an electronic receipt including a store ID which coincides with the affiliated store ID may be extracted.

If extraction of the electronic receipt is ended, the processor 81 confirms whether or not it is not possible to extract any electronic receipt in the process of Act 9 or Act 10 (Act 11). When it is possible to extract at least one electronic receipt (YES in Act 11), the processor 81 calculates a purchase amount M from the electronic receipt which can be extracted (Act 12). That is, the processor 81 sums up all the transaction amounts of money of electronic receipts which can be extracted. Thus, the total price of a commodity purchased by the affiliated store and price for the provided service in the affiliated store in a period when the user uses the parking lot are calculated as the purchase amount M. The processor 81 stores the calculated purchase amount M in the target user record 835R. The processor 81 searches for the discount table 834 (Act 13). The processor 81 acquires the discount amount B for the purchase amount M, and stores the acquired discount amount B in the target user record 835R.

If storing of the discount amount B is completed, the processor 81 searches for the fee table 833 (Act 14). Thus, the processor 81 acquires the basic rate A for the use time H, and calculates the amount of money to be paid C, which is obtained by subtracting the discount amount B from the basic rate A. The processor 81 stores the amount of money to be paid C, in the target user record 835R.

When the response command indicates no electronic receipt (NO in Act 8), or when it is not possible to extract an electronic receipt (NO in Act 11), the processor 81 causes the process to proceed to Act 14. In this case, the processor 81 acquires the basic rate A for the use time H from the fee table 833, and stores the acquired basic rate A as the amount of money to be paid C, in the target user record 835R.

If storing of the amount of money to be paid C is completed, the processor 81 controls the second communication interface 86 to transmit data of the amount of money to be paid C to the second terminal 7 (Act 15). With this control, the second communication interface 86 transmits the data of the amount of money to be paid C to the second terminal 7 via the network 9.

The processor 71 of the second terminal 7, which receives the data of the amount of money to be paid C, causes the amount of money to be paid C to be displayed in the display device 76.

The user who causes the scanner 75 to read the electronic receipt ID in order to exit from the parking lot pays the amount of money to be paid C displayed in the display device 76. For example, when payment in cash is performed, the user puts the required cash into the cash feeding port of the money handling unit 78. When payment in a card medium such as an electronic money card and a prepaid card is performed, the user causes the card reader 77 to read data from the card medium.

The processor 71 waits for payment in cash or a card medium to be completed. If the payment is completed, the processor 71 controls the gate controller 73 to open the gate and controls the communication interface 74 to transmit data of the payment type to the fee handling server 8. In addition, if a sensor (not illustrated) detects that a vehicle passes through the gate, the gate controller 73 closes the gate.

For example, data of the payment type is "cash" when payment in cash is performed, and is "card" when payment in a card medium is performed. When the amount of money to be paid C is 0 yen, payment is considered completed at a time point when the amount of money to be paid C is displayed in the display device 76. In this case, data of the payment type is "none", for example. The communication interface 74 transmits the above-described data of payment type to the fee handling server 8 via the network 9.

The processor 81 of the fee handling server 8 waits for completion of payment for the amount of money to be paid (Act 16). If the data of the payment type is received from the second terminal 7, the processor 81 recognizes completion of the payment (YES in Act 16). The processor 81 stores the data of the payment type in the target user record 835R (Act 17).

The processor 81 creates an electronic receipt based on the data recorded in the target user record 835R (Act 18). The electronic receipt includes data of the entrance time point, the exit time point, the use time, the purchase amount, the discount amount, the amount of money to be paid, the payment type, and the like. The processor 81 controls the first communication interface 85 to transmit the electronic receipt to the electronic receipt server 4 along with the electronic receipt ID of the target user record 835R (Act 19). With this control, the first communication interface 85 transmits the electronic receipt along with the electronic receipt ID to the electronic receipt server 4 via the network 5. Then, the processor 81 causes the process to return to the waiting state in Act 1 and Act 2.

The electronic receipt server 4 stores the electronic receipt received from the fee handling server 8 in association with the electronic receipt ID, similar to the electronic receipt received from the POS system 3. Thus, a user accesses the electronic receipt server 4 via a web-browser from a personal computer, a smart phone, or the like, and thus can view an electronic receipt which includes the use of the parking lot, in addition to an electronic receipt issued from the affiliated store, during a period when the user uses the parking lot.

As described above, according to the fee handling server 8 of the embodiment, an elapsed time from when a user causes the scanner 65 of the first terminal 6 installed at an entrance to read an electronic receipt ID of the user when the user starts using of a parking lot until the user causes the scanner 75 of the second terminal 7 installed at an exit to read the same electronic receipt ID when the user ends the using is calculated as the use time of the parking lot. A purchase record (purchase amount M) for a period when the user uses the parking lot is calculated from an electronic receipt that was issued when the user pays in the affiliated store and was stored in the electronic receipt server 4. The parking fee is automatically calculated based on the use time and the purchase record, and is displayed in the display device 76 of the second terminal 7. Accordingly, the parking fee is determined and collected without paper by utilizing the electronic receipt system 1 which is associated with the affiliated store of the parking lot. At this time, it is possible to automatically discount the parking fee in accordance with the size of the volume of the purchase record.

According to the fee handling server 8, an electronic receipt which includes a use situation of the parking lot is stored in the electronic receipt server in association with an electronic receipt ID. Accordingly, similar to an electronic receipt which is issued when a user pays in the participating store, the user can view an electronic receipt including the use situation of the parking lot by using an information terminal such as smart phone. Since it is not necessary to issue a paper a receipt in which the use situation of the parking lot is recorded, it is also possible to collect the parking lot fee without paper. In addition, in the related art, it is necessary that a user waits at an exit until the user presses on an issuing button of a receipt, and thus the receipt is issued by printing. However, according to the embodiment, waiting is not required. Accordingly, it is possible to cause a vehicle to smoothly pass through the exit of a parking lot.

An electronic receipt issued before the parking lot is used is also stored in the electronic receipt server 4. According to the fee handling server 8, a purchase record is obtained by extracting an electronic receipt issued after the date and time when a user causes the scanner 65 of the first terminal 6 to read an electronic receipt ID of the user when the user starts using. Thus, the electronic receipt issued before the parking lot is used is not used in calculation of the parking fee.

Similarly, an electronic receipt issued in a participating store other than an affiliated store is also stored in the electronic receipt server 4. According to the fee handling server 8, a purchase record is obtained by extracting an electronic receipt which includes a store ID set in the affiliated store database 831. Thus, the electronic receipt issued in the participating store other than the affiliated store is used is not used in calculation of the parking fee. Accordingly, it is possible to utilize the known electronic receipt system 1 as it is.

A modification example of the embodiment will be described below.

In the embodiment, a case where one first terminal 6 and one second terminal 7 which are connected to the fee handling server 8 via the network 9 are provided is described. However, the number of first terminals 6 and the number of second terminals 7 may be equal to or greater than 2. The number of first terminals 6 and the number of second terminals 7 may be different from each other. When a plurality of second terminals 7 are provided, a specific terminal ID is assigned to each of the second terminal 7. When the exit information is transmitted to the fee handling server 8, the exit information is transmitted in a state where the terminal ID is also included in the exit information. If the processor 81 of the fee handling server 8 receives exit information in the process of Act 2 in FIG. 7, the processor 81 stores the terminal ID included in the exit information, in a work area. When data of the amount of money to be paid C is transmitted in the process of Act 15, the data is transmitted to the second terminal 7 specified by the terminal ID stored in the work area. Such information processing is added, and thus the number of first terminals 6 and second terminals 7 which are connected to the network 9 can be arbitrarily set.

In the embodiment, a case where the first terminal 6 and the second terminal 7 read an electronic receipt ID is described. In the electronic receipt system 1, the POS terminal 31 reads an ID of a point card in cooperation with an electronic receipt ID, and thus a service point is also assigned when an electronic receipt is issued. When cooperation with such an electronic receipt system 1 is performed, the first terminal 6 and the second terminal 7 may read an ID of a card in cooperation with an electronic receipt ID. It is undesirable for a driver to operate a smart phone when the driver moves a vehicle at an entrance and an exit of a parking lot. Such a problem is solved by using a cooperation card.

In the embodiment, the facility as a target of fee collection is set to be a parking lot, but it is not limited to the parking lot. For example, in a facility such as an amusement park, amusement facilities, warm bath facilities, and the like, in which a use fee is predetermined, benefits may be assigned in accordance with the size of the amount of money used for food and the like in the facility. In such a case, a store in this facility is set as the participating store of the electronic receipt system 1, and the first terminal 6 is installed at an entrance of the facility and the second terminal 7 is installed at an exit of the facility. The second terminal 7 may download benefit information by near field wireless communication with a smart phone and the like. With the above-described configuration, when a user of an electronic receipt exits from the facility, the benefit may be electronically provided in accordance with the amount of money used for food and the like in the facility. Accordingly, helpfulness and use of an electronic receipt is improved.

The fee handling server 8 is generally provided with a program such as the fee handling program already stored in the memory. However, it is not limited thereto. The fee handling server 8 may be provided when the program is not stored in the memory or which another control program is stored in the memory. In this case, a fee handling program may be written into a storage device which is provided in the fee handling server 8 and is writable, in accordance with an operation of a user or the like. Alternatively, another control program may be rewritten to the fee handling program. The installation of the fee handling program or the like may be performed by being recorded in a removable recording medium or by communication via a network. A recording medium having any form may be used so long as the recording medium such as a CD-ROM and a memory card can store a program and can be read by a device. The function obtained by installing or downloading the program may be realized by cooperating with an operating system (OS) in the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A gate control system that controls access to a facility, the gate control system comprising:
a communication interface configured to communicate with an external server;
at least one input device configured to read an identification code corresponding to a user;
a storage device; and
a processor configured to:
receive an identification code read by the input device when a user begins use of the facility,
control the storage device to store the identification code read by the input device when the user begins use of the facility in association with a time that the user begins use of the facility,
receive an identification code read by the input device when the user ends use of the facility and a time that the user ends use of the facility,
transmit, to the external server via the communication interface, a request for transaction data associated with the identification code read by the input device when the identification code read by the input device when the user ends use of the facility is received,
receive, from the external server via the communication interface, transaction data associated with the identification code read by the input device,
calculate a use time based on the time stored in the storage device compared to the received time that the user ends use of the facility,
calculate a use fee for the facility based on the calculated use time and the received transaction data,
perform a payment processing for the calculated use fee, and
open the gate when the payment processing is complete.

2. The gate control system according to claim 1, wherein the at least one input device includes:
a first input device positioned at an entrance to the facility, and
a second input device positioned at an exit to the facility proximate to the gate.

3. The gate control system according to claim 2, wherein:
the gate proximate to the exit is a first gate, and
the processor is further configured to open a second gate proximate to the entrance when the identification code read by the first input device when the user begins use of the facility is received.

4. The gate control system according to claim 2 or 3, wherein the first input device is a first scanner, and the second input device is a second scanner.

5. The gate control system according to any one of claims 1 to 4, wherein the transaction data received from the external server includes an electronic receipt generated during the use time.

6. The gate control system according to claim 5, wherein the processor is further configured to:
when processing of the payment for the calculated use fee is complete, transmit, to the external server via the communication interface, an electric receipt corresponding to the use of the facility and the processed payment.

7. The gate control system according to any one of claims 1 to 6, wherein the identification code is an electronic receipt ID displayed on a user device so as to be read by the input device.

8. A system comprising:
the gate control system according to any one of claims 1 to 7; and
an electronic receipt system including the server configured to communicate with the gate control system.

9. A method for controlling a gate to a facility, the method comprising:
receiving an identification code read by an input device when a user begins use of the facility;
controlling a storage device to store the identification code read by the input device when the user begins use of the facility in association with a time that the user begins use of the facility;
receiving an identification code read by the input device when the user ends use of the facility and a time that the user ends use of the facility;
transmitting, to an external server, a request for transaction data associated with the identification code read by the input device when the identification code read by the input device when the user ends use of the facility is received;
receiving, from the external server, transaction data associated with the identification code read by the input device;
calculating a use time based on the time stored in the storage device compared to the received time that the user ends use of the facility;
calculating a use fee for the facility based on the calculated use time and the received transaction data;
performing a payment processing for the calculated use fee; and
opening the gate when the payment processing is complete.

10. The method according to claim 9, wherein the input device includes:
a first input device that receives the identification code when the user begins use of the facility and is positioned at an entrance to the facility, and
a second input device that receives the identification code read when the user ends use of the facility and is positioned at an exit to the facility proximate to the gate.

11. The method according to claim 10, wherein the gate proximate to the exit is a first gate, the method further comprising:
opening a second gate proximate to the entrance when the identification code read by the first input device when the user begins use of the facility is received.

12. The method according to claim 10 or 11, wherein the first input device is a first scanner, and the second input device is a second scanner.

13. The method according to any one of claims 9 to 12, wherein the transaction data received from the external server includes an electronic receipt generated during the use time.

14. The method according to claim 13, the method further comprising:
when processing of the payment for the calculated use fee is complete, transmitting, to the external server via the communication interface, an electric receipt corresponding to the use of the facility and the processed payment.

15. A computer readable medium carrying a program for causing a computer for controlling a gate to a facility to perform the method according to any one of claims 9 to 14.
